# EUROPÄISCHE PATENTSCHRIFT

(11) **EP 2 182 568 B1**
(45) Veröffentlichungstag und Bekanntmachung des Hinweises auf die Patenterteilung: **13.02.2013**
(21) Anmeldenummer: 09013439.6
(22) Anmeldetag: 23.10.2009
(51) Int. Cl.: H01M 4/04, H01M 4/13, H01M 4/139, H01M 10/0525

(54) **Elektroden für eine nach galvanischen Prinzipien arbeitende elektrische Einrichtung, wie Lithium-Ionen-Zellen, und Verfahren zu deren Herstellung**
Electrodes for an electric device operating according to galvanic principles, such as a lithium-ion cell, and method for its manufacture
Electrodes pour un dispositif électrique fonctionnant selon des principes galvaniques, comme des cellules ions lithium, et leur procédé de fabrication

(30) Priorität: 23.10.2008 DE 102008053009
(43) Veröffentlichungstag der Anmeldung: 05.05.2010
(73) Patentinhaber: Li-Tec Battery GmbH, 01917 Kamenz (DE)
(72) Erfinder: Gutsch, Andreas, Dr., 59348 Lüdinghausen (DE); Schäfer, Tim, 99768 Harztor (DE)
(74) Vertreter: Wallinger, Michael

(56) Entgegenhaltungen:
- EP-A- 1 020 943
- WO-A-2008/004161
- US-A1- 2006 134 515
- US-A1- 2006 137 175
- US-A1- 2007 055 951

## Beschreibung

Die vorliegende Erfindung betrifft ein Verfahren zur Herstellung einer Elektrode für eine nach galvanischen Prinzipien arbeitende Vorrichtung, insbesondere eine lithium-Ionen-Zelle, eine mit diesen Verfahren hergestellte Elektrode, ein Verfahren zur Herstellung einer nach galvanischen Prinzipien arbeitenden Vorrichtung, insbesondere eine Lithium-Ionen-Zelle, und eine mit diesem Verfahren hergestellte Vorrichtung.

In vielen Fällen werden Elektroden, insbesondere Kathoden und Anoden, für nach galvanischen Prinzipien arbeitende Vorrichtungen, wie insbesondere lithium-Ionen-Zellen, bahnförmig oder bogenförmig hergestellt und in der Form von Bögen bzw. Streifen weiter verarbeitet. Dabei führen Fehlstellen in den wie beschrieben flächenförmig bereitgestellten Elektroden zu einer Schlechtleistung einer unter Benutzung dieser Elektrode hergestellten Vorrichtung bzw. Zelle oder gar zum Ausfall der Vorrichtung bzw. Zelle, bzw. einem daraus hergestellten Akkumulator. Derartige Vorrichtungen bzw. Akkumulatoren müssen entsorgt werden, was einen wirtschaftlichen Nachteil darstellt.

Die US 2006/137175 A1 beschreibt ein Verfahren zur Herstellung einer Batterie, insbesondere einer alkalinen Sekundärbatterie. Die US 2006/134515 A1 beschreibt einen Energiespeicher mit einer positiven und einer negativen Elektrode zwischen denen eine faradische reaktion abläuft.

Der vorliegenden Erfindung liegt die Aufgabe zugrunde, die Weiterverarbeitung von flächenförmig bereitgestellten Elektroden mit Fehlstellen zu verhindern und dadurch den beschriebenen wirtschaftlichen Nachteil zu vermeiden. Diese Aufgabe wird gelöst mit dem Verfahren zur Herstellung einer Elektrode bzw. einem Verfahren zum Herstellen einer nach galvanischen Prinzipien arbeitenden Vorrichtung sowie gemäß dieser Verfahren hergestellten Elektroden bzw. nach galvanischen Prinzipien arbeitenden Vorrichtungen gemäß den Merkmalen der beigefügten Patentansprüche.

Diese Aufgabe wird erfindungsgemäß durch ein Verfahren nach Anspruch 1 gelöst. Sie besteht allgemein darin, Fehlstellen in den flächenförmig hergestellten Elektroden bzw. Elektrodenschicht zu detektieren. Die detektierten Fehlstellen bzw. diese detektierten Fehlstellen umfassende Bereiche der flächenförmig hergestellten Elektrode bzw. Elektrodenschicht können beseitigt werden. Auch können Bereiche bzw. Abschnitte der Elektroden bzw. Elektrodenschichten, in denen keine Fehlstellen detektiert werden konnten, der weiteren Verarbeitung bzw. Verwendung, d.h. dem Fertigstellen von Elektroden und dem Aufbau von nach galvanischen Prinzipien arbeitenden Vorrichtungen, zugeführt werden. Dabei können einteilige, als im Vorgang des Detektierens als fehlstellenfrei bewertete zur weiteren Verarbeitung ausgewählt werden. Es können aber auch detektierte Fehlstellen bzw. detektierte Fehlstellen enthaltende Bereiche repariert werden oder beseitigt werden. Nach dem Beseitigen, beispielsweise durch Heraustrennen, von Fehlstellen bzw. Fehlstellen enthaltende Bereiche können dabei entstehende, fehlstellenfreie Teilbereiche miteinander verbunden werden, um größere fehlstellenfreie Bereiche für die weitere Verarbeitung bzw. Verwendung bereitzustellen.

In einem ersten Aspekt der Erfindung wird, wie beansprucht, ein Verfahren zur Herstellung einer Elektrode für eine nach galvanischen Prinzipien arbeitende Vorrichtung, insbesondere eine Lithium-lonen-Zelle bereitgestellt. Das Verfahren umfasst (i) das Herstellen einer flächenförmigen Elektrode. Erfindungsgemäß wird (ii) detektiert, ob und gegebenenfalls wo auf der flächenförmigen Elektrode eine oder mehrere Fehlstellen vorhanden sind. Ferner wird (iii) für eine jeweilige detektierte Fehlstelle eine Umgebung der Fehlstelle einschließlich der Fehlstelle beseitigt.

So kann bzw. können auf der Grundlage des Ergebnisses des Detektionsschritts zumindest ein Teilbereich oder mehrere Teilbereiche der flächenförmigen Elektrode ohne Fehlstelle, ein sogenannter fehlstellenfreier Teilbereich bzw. mehrere fehlstellenfreie Teilbereiche bereitgestellt werden.

Ein Vorteil des erfindungsgemäßen Verfahrens besteht darin, dass die flächenförmige Elektrode in dem Detektionsschritt daraufhin überprüft wird, ob und wo auf der flächenförmigen Elektrode möglicherweise Fehlstellen vorhanden sind. Falls in dem Detektionsschritt keine Fehlstelle detektiert bzw. festgestellt wird, wird der im Detektionsschritt überprüfte Teilbereich als frei von Fehlstellen angesehen und als Bereich bzw. Teilbereich ohne Fehlstelle für die weitere Verarbeitung bereitgestellt. Falls bei der Überprüfung in dem Detektionsschritt eine oder mehrere Fehlstellen erkannt werden, wird diese Fehlstelle einschließlich einer Umgebung dieser Fehlstelle beseitigt, so dass nur Teilbereiche der flächenförmigen Elektrode verbleiben, für welche Teilbereiche in dem Detektionsschritt keine Fehlstellen erkannt worden sind und die folglich als frei von Fehlstellen bewertet worden sind. Nur als fehlstellenfrei detektierte bzw. bewertete Bereiche werden für die weitere Verarbeitung bereitgestellt.

Das Beseitigen der Fehlstelle einschließlich einer Umgebung der Fehlstelle kann allgemein dadurch bewirkt werden, dass die Fehlstelle bzw. die Umgebung der Fehlstelle einschließlich der Fehlstelle aus der flächenförmigen Elektrode ohne Ersatz beseitigt, insbesondere herausgetrennt, beispielsweise herausgeschnitten oder herausgestanzt wird, oder durch einen fehlstellenfreien Teilbereich ersetzt wird, oder dadurch, dass die Fehlstelle repariert wird.

Unter einer flächenförmigen Elektrode wird hierin eine über eine Fläche verteilte Anordnung von Elektrodenmaterial, insbesondere Material zur Ausbildung einer aktiven Masse einer Kathode bzw. Anode für eine nach galvanischen Prinzipien arbeitende Vorrichtung, beispielsweise eine Lithium-Ionen-Zelle, verstanden. Das Material kann in Flächenform freitragend oder von einem Substrat getragen bzw. auf ein Substrat aufgebracht sein. Das Substrat kann als Ableiteinrichtung zum Ableiten eines elektrischen Stroms aus dem Elektrodenmaterial dienen und beispielsweise als Metallfolie, insbesondere als Kupfer- bzw. Aluminiumfolie ausgebildet sein. Das Elektrodenmaterial kann auf dem Substrat, insbesondere der Ableiteinrichtung, einseitig oder auch beidseitig aufgebracht sein.

Wenn das Elektrodenmaterial beidseitig auf einem Substrat aufgebracht ist, dann umfasst der Detektionsschritt das Überprüfen beider Seiten bzw. das Detektieren in der auf der einen Seite aufgebrachten Schicht und das Überprüfen bzw. Detektieren in der auf der gegenüberliegenden Seite des Substrats aufgebrachten Schicht des Elektrodenmaterials auf das Vorhandensein von Fehlstellen bzw. deren Position auf dem Elektrodenmaterial.

Unter einer Fehlstelle bzw. einer Fehlstelle einer flächenförmigen Elektrode wird hierin insbesondere eine Fehlstelle in dem flächenförmig verteilten Elektrodenmaterial verstanden. Unter einer Fehlstelle in dem flächenförmig verteilten Elektrodenmaterial wird hierin eine Stelle bzw. ein lokalisierbarer bzw. lokal begrenzter Bereich des flächenförmig verteilten Elektrodenmaterials verstanden, in dem eine lokale Abweichung irgend eines Parameters der aus dem Elektrodenmaterial gebildeten Schicht von einem über eine größere Fläche definierten Mittelwert dieses Parameters auftritt, wobei die Abweichung so groß ist, dass mit einer Schlechtleistung bzw. einem Ausfall der Elektrode bzw. einer unter Verwendung dieser Elektrode hergestellten Vorrichtung bzw. Zelle zu rechnen ist. Ein eine Fehlstelle charakterisierender Parameter der aus dem Elektrodenmaterial gebildeten Schicht kann eine Schichtdicke, eine Masse pro Fläche, eine Korn- bzw. Teilchengrößenverteilung, eine Schichtporosität, ein Überdeckungsgrad beispielsweise des Substrats, ein mittlerer Teilchenabstand, oder ein sonstiger, in einem Messverfahren zum Überprüfen einer Homogenität der Elektrodenmaterialschicht messbarer Parameter der Schicht sein.

Unter Umgebung der Fehlstelle ist hierin ein an die Fehlstelle angrenzender oder die Fehlstelle umfassender Teilbereich der flächenförmigen Elektrode zu verstehen, wobei in dem Teilbereich die Struktur der flächenförmigen Elektrode bzw. des flächenförmig verteilten Elektrodenmaterials bzw. der die Homogenität der Schicht beschreibende Parameter aufgrund des Vorhandenseins der Fehlstelle von dem über eine größere Fläche gemittelten Parameter abweichen kann, und wobei dem der Fehlstelle abgewandten Rand des Teilbereichs die flächenförmige Elektrode bzw. Elektrodenmaterialschicht als fehlstellenfrei bewertet wird.

In dem Herstellungsschritt (Schritt i) kann die flächenförmige Elektrode bahnförmig, beispielsweise in einem Endlosverfahren, hergestellt werden. Eine bahnförmige Herstellung ist besonders effizient und wirtschaftlich wegen der möglichen relativ langen ununterbrochenen Laufzeiten der Herstellungsvorrichtung. Gemäß einer bevorzugten Ausführungsform der vorliegenden Erfindung ist es vorgesehen, dass im Herstellungsschritt die flächenförmige Elektrode bahnförmig, beispielsweise in einem Endlosverfahren, hergestellt wird.

In dem Herstellungsschritt (Schritt i) kann die flächenförmige Elektrode auch bogenförmig, beispielsweise in einem Stapelverfahren bzw. Batchverfahren, hergestellt werden. Eine bogenförmige Herstellung ermöglicht eine Variation von Bogen zu Bogen bezüglich der Elektrodenart, der Größe des verwendeten Elektrodenmaterials bzw. der Parameter der Schicht, wie etwa das Schichtgewicht pro Fläche, die Porosität oder Dicke der Schicht. Gemäß einer bevorzugten Ausführungsform der vorliegenden Erfindung ist es vorgesehen, dass im Herstellungsschritt die flächenförmige Elektrode bogenförmig, beispielsweise in einem Stapelverfahren, hergestellt wird.

In dem Detektionsschritt (Schritt ii) kann ein Verfahren zum Detektieren von Fehlstellen aus einer Gruppe ausgewählt sein, die folgendes umfasst: ein optisches Verfahren, ein Verfahren mit Auswerten mikroskopisch vergrößerter Bilder von Bereichen der flächenförmigen Elektrode, ein Verfahren umfassend Messungen einer elektrischen Leitfähigkeit von Bereichen der flächenförmigen Elektrode, ein Verfahren umfassend Messungen einer dielektrischen Kapazität von Bereichen der flächenförmigen Elektrode oder Kombinationen hieraus. Die in der Gruppe enthaltenen Verfahren sind berührungslose Verfahren, die das Überprüfen von im Vergleich zu typischen auftretenden Fehlstellen relativ großen Flächenbereichen geeignet sind und die beispielsweise durch Verschieben eines Messfensters über die Oberfläche der flächenförmigen Elektrode zum Abtasten bzw. Scannen der gesamten Oberfläche der flächenförmigen Elektrode geeignet sind.

Ein optisches Verfahren zum Detektieren von Fehlstellen kann das Aufnehmen eines Bildes von einem Bereich der flächenförmigen Elektrode und das Erkennen einer lokalen Abweichung eines Wertes eines insbesondere für eine Fehlstelle indikativen Bildparameters von einem über eine relativ große Fläche bestimmten Mittelwert des Bildparameters umfassen. Dabei kann das Bild insbesondere in Reflexion oder in Transmission aufgenommen werden. Der Bildparameter kann beispielsweise eine Helligkeit oder ein Kontrast sein. Der Bildparameter kann repräsentativ für einen Parameter der Schicht, wie etwa die Schichtdicke, die Masse pro Fläche, die Porosität oder Homogenität der Schicht sein. Das optische Verfahren kann automatisiert oder unter Steuerung einer Person ausgeführt werden. Insbesondere kann das Erkennen der lokalen Abweichung automatisiert, beispielsweise unter Benutzung von Bildbearbeitungssoftware, oder visuell von einer Person ausgeführt werden.

Das Verfahren mit Messungen der elektrischen Leitfähigkeit kann das Messen eines elektrischen Widerstands eines Bereichs der flächenförmigen Elektrode umfassen. Dabei kann der Bereich im wesentlichen streifenförmig sein und die Leitfähigkeit insbesondere in Längsrichtung des streifenförmigen Bereichs gemessen werden. Zum Messen des elektrischen Widerstands eines Ausschnitts der flächenförmigen Elektrode kann der Ausschnitt an gegenüberliegenden Stirnseiten mit Messelektroden kontaktiert werden. Zum Abtasten einer größeren Fläche kann der durch die Kontaktierung erfasste Bereich verschoben werden, beispielsweise durch Abnehmen der Messelektroden und Neukontaktieren in neuer Position. Der elektrische Widerstand eines Ausschnitts hängt ab von der Schichtdicke und der Porosität bzw. der Masse pro Fläche und kann beim Vorhandensein einer Fehlstelle lokal von einem großflächigen Mittelwert abweichen und mithin für eine Fehlstelle indikativ sein. Gemäß einer bevorzugten Ausführungsform der vorliegenden Erfindung ist es vorgesehen, dass das Verfahren mit Messungen der elektrischen Leitfähigkeit das Messen eines elektrischen Widerstands eines Bereichs der flächenförmigen Elektrode umfasst, insbesondere eines streifenförmigen Bereichs insbesondere in dessen Längsrichtung.

Das Verfahren mit Auswerten mikroskopisch vergrößerter Bilder kann das Aufnehmen eines vergrößerten Bildes eines Bereichs der flächenförmigen Elektrode und durch insbesondere sequentielles Aufnehmen von Bildern in mehreren, geeignet positionierten Bereichen, Abtasten der insbesondere im wesentlichen gesamten Oberfläche der flächenförmigen Elektrode umfassen. Dies kann mittels eines optischen Mikroskops oder eines Rasterelektronenmikroskops durchgeführt werden. Durch die mikroskopische Vergrößerung können auch räumlich sehr begrenzte bzw. sehr kleine Fehlstellen detektiert werden. Gemäß einer bevorzugten Ausführungsform der vorliegenden Erfindung ist es vorgesehen, dass das Verfahren mit Auswerten mikroskopisch vergrößerter Bilder folgende Schritte umfasst:
- Aufnehmen eines vergrößerten Bildes eines Bereichs der flächenförmigen Elektrode, insbesondere mittels eines optischen Mikroskops oder eines Rasterelektronenmikroskops, und
- durch insbesondere sequentielles Aufnehmen von Bildern in mehreren, geeignet positionierten Bereichen, Abtasten der Oberfläche der flächenförmige Elektrode.

Das Verfahren mit Messungen der dielektrischen Kapazität kann das Messen der dielektrischen Kapazität eines jeweiligen, sich in dem Messfenster befindlichen Bereichs der flächenförmigen Elektrode und durch insbesondere sequentielles Messen der dielektrischen Kapazität in mehreren, geeignet positionierten Messfenstern bzw. Bereichen, Abtasten der insbesondere im wesentlichen gesamten Oberfläche der flächenförmigen Elektrode umfassen. Die dielektrische Kapazität eines Ausschnitts der flächenförmigen Elektrode hängt ab von der Schichtdicke und der Porosität bzw. der Masse pro Fläche des Elektrodenmaterials und kann indikativ für das Vorhandensein einer Fehlstelle sein. Messungen der dielektrischen Kapazität sind besonders für ein automatisiertes Detektionsverfahren geeignet. Gemäß einer bevorzugten Ausführungsform der vorliegenden Erfindung ist es vorgesehen, dass das Verfahren mit Messungen der dielektrischen Kapazität folgende Schritte umfasst:
- Messen der dielektrischen Kapazität eines jeweiligen, sich in einem Messfenster befindlichen Bereichs der flächenförmigen Elektrode und
- durch insbesondere sequentielles Messen der dielektrischen Kapazität in mehreren, geeignet positionierten Messfenstern bzw. Bereichen, Abtasten der Oberfläche der flächenförmigen Elektrode.

Der Schritt zum Herstellen der flächenförmigen Elektrode kann das Aufbringen einer Schicht eines Elektrodenmaterials auf ein Substrat umfassen. Das Elektrodenmaterial kann ein zum Ausbilden einer Kathode geeignetes Material, ein sogenanntes Kathodenmaterial, oder ein zum Ausbilden einer Anode geeignetes Material, ein sogenanntes Anodenmaterial sein. Das Substrat kann insbesondere ein einen elektrischen Strom ableitendes Material, insbesondere eine Metallfolie sein. Das Substrat dient als Träger des flächenförmig verteilten Elektrodenmaterials und dient zur Stabilisierung der Schicht des Elektrodenmaterials. Es kann die Handhabbarkeit bei der weiteren Verarbeitung der flächenförmigen Elektrode erleichtern. Gemäß einer bevorzugten Ausführungsform der vorliegenden Erfindung ist es vorgesehen, dass der Herstellungsschritt das Aufbringen einer Schicht eines Elektrodenmaterials, insbesondere eines Kathodenmaterials oder eines Anodenmaterials, auf ein Substrat, insbesondere auf ein einen elektrischen Strom ableitendes Material, wie eine Metallfolie, umfasst.

Wenn die flächenförmige Elektrode in der Form von auf einem Substrat als Träger verteilten Elektrodenmaterial hergestellt wird, kann in dem Schritt des Beseitigens einer Umgebung der Fehlstelle (Beseitigungsschritt) ein die Fehlstelle enthaltender Abschnitt der Schicht des Elektrodenmaterials von dem Substrat entfernt werden und in dem freigelegten Abschnitt eine frische Elektrodenschicht auf das Substrat aufgebracht werden. Vorzugsweise wird noch in der aufgebrachten frischen Elektrodenschicht detektiert, ob und wo darin eine oder mehrere Fehlstellen vorhanden sind. Auf diese Weise kann eine Fehlstelle repariert werden, wobei das Substrat ohne Verlust weiterverwendet wird und insbesondere im Substrat keine Nahtstelle entsteht. Gemäß einer bevorzugten Ausführungsform der vorliegenden Erfindung ist es vorgesehen, dass im Beseitigungsschritt ein die Fehlstelle enthaltender Abschnitt der Schicht des Elektrodenmaterials von dem Substrat entfernt wird und in dem freigelegten Abschnitt eine frische Elektrodenschicht auf das Substrat aufgebracht wird und insbesondere anschließend in der frischen Elektrodenschicht detektiert wird, ob und wo darin eine oder mehrere Fehlstellen vorhanden sind.

In dem Beseitigungsschritt (Schritt iii) kann ein die Fehlstelle enthaltender Bereich der flächenförmigen Elektrode aus der flächenförmigen Elektrode entfernt bzw. herausgetrennt und durch einen hinsichtlich der Form dem entfernten bzw. herausgetrennten Bereich entsprechenden, keine Fehlstelle aufweisenden Bereich, der aus derselben oder aus einer anderen flächenförmigen Elektrode stammen kann, ersetzt werden. Dies ermöglicht, dass die ursprünglich ohne Fehlstelle hergestellten Bereich weitestgehend für den Aufbau einer nach galvanischen Prinzipien arbeitenden Vorrichtung bzw. Zelle weiterverwendet werden können und relativ großflächige, fehlstellenfreie Bereiche für die weitere Verarbeitung zur Verfügung stehen. Gemäß einer bevorzugten Ausführungsform der vorliegenden Erfindung ist es vorgesehen, dass im Beseitigungsschritt ein die Fehlstelle enthaltender Bereich der flächenförmigen Elektrode aus der flächenförmigen Elektrode entfernt und durch einen hinsichtlich der Form dem entfernten Bereich entsprechenden, fehlstellenfreien Bereich derselben oder einer anderen flächenförmigen Elektrode ersetzt wird.

Alternativ dazu kann in dem Beseitigungsschritt (Schritt iii) ein eine detektierte Fehlstelle enthaltender Bereich der flächenförmigen Elektrode aus der flächenförmigen Elektrode entlang von Abtrennlinien herausgetrennt werden. Vorzugsweise ist der Bereich streifenförmig und insbesondere die Abtrennlinien im wesentlichen parallel zueinander. Streifen sind besonders leicht zu handhaben und weisen im wesentlichen gerade Längsseiten auf, die leicht miteinander zu verbinden sind. Das Heraustrennen kann durch Herausschneiden oder Herausstanzen ausgeführt werden. Gemäß einer bevorzugten Ausführungsform der vorliegenden Erfindung ist es vorgesehen, dass im Beseitigungsschritt ein eine detektierte Fehlstelle enthaltender Streifen der flächenförmigen Elektrode aus der flächenförmigen Elektrode entlang von parallelen Abtrennlinien herausgetrennt, beispielsweise heraus geschnitten oder gestanzt, wird.

Wenn beim Heraustrennen des eine detektierte Fehlstelle enthaltenden Bereichs der flächenförmigen Elektrode zwei Teilbereiche, die keine Fehlstelle enthalten, entstehen, können die entstandenen Teilbereiche leicht und formschlüssig entlang der Abtrennlinien zusammengefügt werden. Auf diese Weise können die Bereiche ohne Fehlstellen im wesentlichen weiter verwendet und durch das Zusammenfügen ein insgesamt relativ großer fehlstellenfreier Bereich der flächenförmigen Elektrode für die Weiterverarbeitung erhalten werden. Gemäß einer bevorzugten Ausführungsform der vorliegenden Erfindung ist es vorgesehen, dass wenn beim Heraustrennen des eine detektierte Fehlstelle enthaltenden Bereichs der flächenförmigen Elektrode zwei Teilbereiche, die keine Fehlstelle enthalten, entstehen, die entstandenen Teilbereiche entlang der Abtrennlinien zusammengefügt werden.

Das Verfahren kann ferner das Zusammenfügen von zwei fehlstellenfreien Abschnitten der selben flächenförmigen Elektrode oder von zwei verschiedenen flächenförmigen Elektroden, insbesondere entlang jeweiliger Ränder bzw. Abtrennlinien der Abschnitte umfassen. Auch so können relativ große fehlstellenfreie Bereiche, die größer als die im Herstellungsschritt unmittelbar erzeugten fehlstellenfreien Bereiche sind, bereitgestellt werden. Ferner wird es möglich, fehlstellenfreie Bereiche aus verschiedenen flächenförmigen Elektroden, die aus unterschiedlichen Herstellungsschritten bzw. -prozessen mit gegebenenfalls verschiedenen Herstellungsparametern entstammen können, zu einer Elektrode kombinieren. Gemäß einer bevorzugten Ausführungsform der vorliegenden Erfindung ist es vorgesehen, dass das erfindungsgemäße Verfahrenes ferner das Zusammenfügen von zwei fehlstellenfreien Abschnitten derselben flächenförmigen Elektrode oder von zwei fehlstellenfreien Abschnitten umfasst, die aus zwei verschiedenen flächenförmigen Elektroden herausgetrennt worden sind, entlang jeweiliger Ränder bzw. Abtrennlinien der Abschnitte.

Das Zusammenfügen kann ein stoßförmiges miteinander in Kontakt Bringen der Ränder der zusammenzufügenden Abschnitte umfassen. So kann an der Naht eine nahtbedingte lokale Erhöhung der Dicke der flächenförmigen Elektrode vermieden werden, und insbesondere beim Zusammenfügen von gleich dicken Abschnitten eine im wesentlichen konstante Dicke an der Naht erzielt werden. Gemäß einer bevorzugten Ausführungsform der vorliegenden Erfindung ist es vorgesehen, dass das Zusammenfügen ein stoßförmiges miteinander in Kontakt Bringen der Ränder der zusammenzufügenden Abschnitte umfasst.

Alternativ kann das Zusammenfügen ein überlappendes Miteinander in Kontakt Bringen jeweiliger, insbesondere entlang der Ränder verlaufender Randstreifen der zusammenzufügenden Abschnitte umfassen. Durch das Überlappen kann eine festere bzw. innigere Verbindung der zusammenzufügenden Abschnitte erzielt werden. Gemäß einer bevorzugten Ausführungsform der vorliegenden Erfindung ist es vorgesehen, dass das Zusammenfügen ein überlappendes miteinander in Kontakt Bringen jeweiliger, insbesondere entlang der Ränder verlaufender Randstreifen der zusammenzufügenden Abschnitte umfasst.

Nach dem Beseitigungsschritt (Schritt iii) kann zumindest ein Teilbereich der bereitgestellten, fehlstellenfreien flächenförmigen Elektrode zusammengerollt werden. Gemäß einer bevorzugten Ausführungsform der vorliegenden Erfindung ist es vorgesehen, dass nach dem Beseitigungsschritt zumindest ein Teilbereich der flächenförmigen Elektrode zusammengerollt wird.

Es kann nach dem Beseitigungsschritt auch eine Schicht eines, insbesondere flächenförmig bereitgestellten Separatormaterials auf zumindest einen Bereich der fehlstellenfreien flächenförmigen Elektrode aufgelegt werden und zumindest ein Teilbereich des mit dem aufgelegten Separatormaterials versehenen Bereichs der flächenförmigen Elektrode zusammengerollt werden. Durch das Zusammenrollen erhält man eine kompakte Bauform der Elektrode. Gemäß einer bevorzugten Ausführungsform der vorliegenden Erfindung ist es vorgesehen, dass nach dem Beseitigungsschritt eine Schicht eines Separatormaterials auf zumindest einen Bereich der flächenförmigen Elektrode aufgelegt wird und zumindest ein Teilbereich des mit dem aufgelegten Separatormaterial versehenen Bereichs der flächenförmigen Elektrode zusammengerollt wird.

Alternativ zu dem Zusammenrollen kann das Verfahren die folgenden, nach dem Beseitigungsschritt (Schritt iii) auszuführenden Schritte umfassen: Falten der flächenförmigen Elektrode in regelmäßigen Abständen und entlang von im wesentlichen parallel zueinander angeordneten Faltlinien abwechselnd in einer ersten Richtung und einer der ersten Richtung entgegengesetzten zweiten Richtung Ausbilden eines Stapels von übereinander angeordneten und jeweils einer Faltlinie zusammenhängenden Bereichen der flächenförmigen Elektrode. Auch so erhält man eine kompakte Bauform der Elektrode, mit nach Art einer Ziehharmonika Bereichen bzw. einem im Querschnitt M-förmigen Profil. Insbesondere kann in dem so ausgebildeten Stapel ferner noch flächenförmig ausgebildetes Separatormaterial eingefügt werden und zwar zwischen den jeweils übereinander angeordneten Abschnitten der flächenförmigen Elektrode, insbesondere in der Form von zu zwei jeweiligen übereinander angeordneten Abschnitten kongruent ausgebildeten Bögen aus Separatormaterial. Gemäß einer bevorzugten Ausführungsform der vorliegenden Erfindung ist es vorgesehen, dass das Verfahren die folgenden, nach dem Beseitigungsschritt auszuführenden Schritte umfasst:
- Falten der flächenförmigen Elektrode in regelmäßigen Abständen und entlang von im Wesentlichen parallel zueinander angeordneten Faltlinien abwechselnd in einer ersten Richtung und einer der ersten Richtung entgegen gesetzten Richtung,
- Ausbilden eines Stapels von übereinander angeordneten und jeweils entlang einer Faltlinie zusammenhängenden Abschnitten der flächenförmigen Elektrode, und insbesondere noch ferner
- Einfügen von flächenförmig ausgebildetem Separatormaterial, insbesondere in der Form von zu zwei jeweiligen übereinander angeordneten Abschnitten kongruent ausgebildeten Bögen von Separatormaterial, zwischen den jeweils übereinander angeordneten Abschnitten der flächenförmigen Elektrode.

In einem zweiten Aspekt der Erfindung wird ein Verfahren zur Herstellung einer Elektrode für eine nach galvanischen Prinzipien arbeitende Vorrichtung, insbesondere einer Lithium-Ionen-Zelle, bereitgestellt. Das Verfahren umfasst das Herstellen einer flächenförmigen Elektrode. Erfindungsgemäß umfasst das Verfahren ferner Detektieren, ob und gegebenenfalls wo auf der flächenförmigen Elektrode eine oder mehrere Fehlstellen vorhanden sind, und ferner auf der Grundlage der Ergebnisse des Detektionsschritts, Bereitstellen von mindestens einem fehlstellenfreien Teilbereich der flächenförmigen Elektrode. Der Teilbereich ist in vorteilhafter Weise streifenförmig.

Ein Vorteil dieses Verfahrens ist, dass ein damit bereitgestellter Teilbereich in dem Detektionsschritt (Schritt ii) auf das Vorhandensein von Fehlstellen hin überprüft und als fehlstellenfrei bewertet worden ist.

Unter dem Begriff "fehlstellenfrei" wird hierin verstanden, dass auf einer flächenförmigen Elektrode bzw. einem Teilbereich davon bei der Ausführung des Detektionsschritts bzw. beim Überprüfen bzw. Detektieren, ob und gegebenenfalls wo auf der flächenförmigen Elektrode eine oder mehrere Fehlstellen vorhanden sind, mit dem verwendeten Detektionsverfahren und im Rahmen der Messgenauigkeit keine Fehlstelle nachgewiesen bzw. detektiert werden konnte.

Unter einer Übereinanderanordnung wird hierin eine Anordnung mehrerer flächenartiger Schichten bzw. flächenartiger Elemente übereinander verstanden, wobei zwischen den übereinander angeordneten Schichten bzw. Elementen auch Zwischenräume vorhanden sein können, d.h. die Schichten bzw. Elemente berühren sich nicht notwendigerweise. In der hierin zugemessenen Bedeutung umfasst eine Übereinanderanordnung einen Stapel, jedoch ist der Begriff Stapel hierin unabhängig von den Raumrichtungen vertikal und horizontal bzw. oben und unten zu verstehen.

Das Verfahren nach dem zweiten Aspekt kann ferner umfassen: Verbinden von zumindest einem Teilabschnitt eines Randes eines ersten fehlstellenfreien Teilbereichs der flächenförmigen Elektrode mit zumindest einem Teilabschnitt eines Randes eines zweiten fehlstellenfreien Teilbereichs von derselben oder von einer zweiten flächenförmigen Elektrode entlang jeweiliger formschlüssiger Teilabschnitte der Ränder des ersten und zweiten Teilbereichs. Insbesondere kann ein Teilbereich ein streifenförmiger Teilbereich sein und ein Rand bzw. Teilabschnitt eines Randes kann zumindest abschnittsweise gerade sein. Durch das Verbinden von zwei fehlstellenfreien Teilbereichen kann eine insgesamt fehlstellenfreie flächenförmige Elektrode bereitgestellt werden, deren Fläche größer als es eine herstellungsbedingt in ihrer Größe beschränkte Fläche eines fehlstellenfreien Teilbereichs ist. Gemäß einer bevorzugten Ausführungsform der vorliegenden Erfindung ist es vorgesehen, dass das Verfahren ferner umfasst:
Verbinden von zumindest einem Teilabschnitt eines Randes eines ersten fehlstellenfreien Teilbereichs der flächenförmigen Elektrode mit zumindest einem Teilabschnitt eines Randes eines zweiten fehlstellenfreien Teilbereichs von derselben oder von einer zweiten flächenförmigen Elektrode entlang jeweiliger formschlüssiger, insbesondere zumindest abschnittsweise gerader Teilabschnitte der Ränder des ersten und zweiten Teilbereichs.

In dem Verfahren nach dem zweiten Aspekt kann der erste und der zweite Teilbereich sowie ein dritter fehlstellenfreier Teilbereich der ersten, zweiten oder einer dritten flächenförmigen Elektrode jeweils streifenförmig ausgebildet sein und das Verfahren kann ferner umfassen: Verbinden von zumindest einem Teilabschnitt des Randes des dritten Teilbereichs mit zumindest einem Teilabschnitt des Randes des zweiten Teilbereichs, der dem mit dem ersten Teilbereich verbundenen Teilabschnitt des Randes des zweiten Teilbereichs gegenüberliegt. Auf diese Weise kann eine aus drei Teilbereichen zusammengesetzte, insgesamt fehlstellenfreie Elektrode bereitgestellt werden. Es können so auch ein vierter und weitere Abschnitte angefügt werden. Gemäß einer bevorzugten Ausführungsform der vorliegenden Erfindung ist es vorgesehen, dass der erste und der zweite Teilbereich sowie ein dritter fehlstellenfreier Teilbereich der ersten, zweiten oder dritten flächenförmigen Elektrode jeweils streifenförmig ausgebildet sind und dass das Verfahren ferner umfasst: Verbinden von zumindest einem Teilabschnitt des Randes des dritten Teilbereichs mit zumindest einem Teilabschnitt des Randes des zweiten Teilbereichs, der dem mit dem ersten Teilbereich verbundenen Teilabschnitt des Randes des zweiten Teilbereichs gegenüberliegt.

Immer noch nach dem zweiten Aspekt der Erfindung wird ein Verfahren zur Herstellung einer nach galvanischen Prinzipien arbeitenden Zelle, insbesondere einer Lithium-Ionen-Zelle bereitgestellt, das die folgenden Schritte umfasst: Verbinden von zwei, drei, vier oder mehr fehlstellenfreien, insbesondere gemäß dem Verfahren nach dem zweiten Aspekt der Erfindung hergestellten Teilbereichen einer flächenförmigen Elektrode und Ausbilden einer aus Teilbereichen zusammengesetzten Elektrode, Ausbilden einer Übereinanderordnung mit der zusammengesetzten Elektrode als ersten Schicht, einer Separatorschicht aus flächenförmig bereitgestelltem Separatormaterial als zweiten Schicht und einer aus einem fehlstellenfreien einteiligen Teilbereich hergestellten und zu der zusammengesetzten Elektrode komplementären Elektrode als dritten Schicht.

In diesem Verfahren kann die zusammengesetzte Elektrode eine Kathode bzw. eine Anode sein. Die dazu komplementäre Elektrode ist dann eine Anode bzw. Kathode.

Unter komplementärer Elektrode wird hierin eine zu einer anderen Elektrode bezüglich ihrer Polarität entgegengesetzte Elektrode verstanden. Wenn die andere Elektrode insbesondere eine Anode ist, ist die dazu komplementäre Elektrode eine Kathode und wenn die andere Elektrode eine Kathode ist, ist die dazu komplementäre Elektrode eine Anode.

Unter einem einteiligen Teilbereich wird hierin ein Teilbereich verstanden, der als ganzes in dem Detektionsschritt als fehlstellenfrei bewertet worden ist, d.h. der nicht aus zwei oder mehreren in dem Detektionsschritt als fehlstellenfrei bewerteten Teilbereichen zusammengesetzt ist.

In diesem Verfahren wird also eine aus mehreren Teilbereichen zusammengesetzte Elektrode einer komplementären einteiligen Elektrode gegenübergestellt bzw. mit dieser zu einer nach galvanischen Prinzipien arbeitenden Vorrichtung verbaut.

Dieses Verfahren ist insbesondere effizient und wirtschaftlich, da es die Verwendung auch von relativ kleinen fehlstellenfreien Teilbereichen zum Ausbilden einer insgesamt fehlstellenfreien Elektrode ermöglicht. Es wurde überraschend herausgefunden, dass dieses Verfahren besonders vorteilhaft ist, wenn zusammengesetzte Elektrode die positive Elektrode bzw. die Kathode ist.

Nach dem ersten Aspekt und dem zweiten wird ein Verfahren zum Herstellen einer nach galvanischen Prinzipien arbeitenden Vorrichtung, insbesondere einer Lithium-Ionen-Zelle, bereitgestellt, das die folgenden Schritte umfasst: Ausbilden einer Übereinanderanordnung von einem Bereich einer fehlstellenfreien, insbesondere gemäß dem oben beschriebenen Verfahren nach dem ersten Aspekt hergestellten, flächenförmigen Elektrode mit Kathodenmaterial (Kathode), einem flächenförmig bereitgestellten Separatormaterial und einem Bereich einer fehlstellenfreien, insbesondere gemäß dem oben beschriebenen Verfahren nach dem ersten Aspekt hergestellten flächenförmigen Elektrode mit Anodenmaterial (Anode).

Ferner wird ein Verfahren zur Herstellung einer nach galvanischen Prinzipien arbeitenden Zelle, insbesondere eine Lithium-Ionen-Zelle, bereitgestellt, das die folgenden Schritte umfasst: Verbinden von zwei, drei, vier oder mehr fehlstellenfreien, insbesondere gemäß dem Verfahren nach dem zweiten Aspekt hergestellten Teilbereichen flächenförmiger Elektroden mit Kathodenmaterial und Ausbilden einer aus den Teilbereichen zusammengesetzten, flächenförmigen Kathode, Verbinden von zwei, drei, vier oder mehr fehlstellenfreien, insbesondere gemäß dem Verfahren nach dem zweiten Aspekt hergestellten Teilbereichen flächenförmiger Elektroden mit Anodenmaterial und Ausbilden einer aus den Teilbereichen zusammengesetzten, flächenförmigen Anode, und Ausbilden einer Übereinanderanordnung bestehend aus der zusammengesetzten Kathode als ersten Schicht, einer Separatorschicht aus flächenförmig bereitgestelltem Separatormaterial als zweiten Schicht und der zusammengesetzten Anode als dritten Schicht.

Auch dieses Verfahren ist besonders effizient und wirtschaftlich, weil relativ kleine Teilbereiche zu einer relativ großen flächenförmigen fehlstellenfreien Elektrode zusammengesetzt werden. Damit ist dieses Verfahren besonders tolerant auch beim Auftreten von relativ großen Fehlstellenhäufigkeiten bei der Herstellung einer jeweiligen Elektrode (Kathode bzw. Anode), weil die detektierten Fehlstellen und/oder deren Umgebungen entfernt und die verbleibenden, fehlstellenfreien Teilbereiche miteinander verbunden werden.

In vorteilhafter Weise können die zwei, drei, vier oder mehr Teilbereiche mit Anodenmaterial jeweils kongruent zu entsprechenden zwei, drei, vier oder mehr Teilbereichen mit Kathodenmaterial ausgebildet sein. Ferner können die jeweiligen zueinander kongruenten Teilbereiche mit Kathodenmaterial und Teilbereiche mit Anodenmaterial in der Übereinanderanordnung kongruent übereinander mit dazwischen angeordnetem Separatormaterial angeordnet sein. Gemäß einer bevorzugten Ausführungsform der vorliegenden Erfindung ist es vorgesehen, dass die zwei, drei, vier bzw. mehr Teilbereiche mit Anodenmaterial jeweils kongruent zu entsprechenden zwei, drei, vier bzw. mehr Teilbereichen mit Kathodenmaterial ausgebildet worden sind, und dass die jeweiligen zueinander kongruenten Teilbereiche mit Kathodenmaterial und die Teilbereiche mit Anodenmaterial in der Übereinanderanordnung kongruent übereinander mit dazwischen angeordnetem Separatormaterial angeordnet sind.

Dieses Verfahren eröffnet eine neue Design- bzw. Entwurfsmöglichkeit für eine nach galvanischen Prinzipien arbeitende Vorrichtung. Es können vorteilhafte Eigenschaften von verschiedenen Elektrodenmaterialien in vorteilhafter Weise miteinander kombiniert bzw. gemischt werden, indem aus den verschiedenen Elektrodenmaterialien hergestellte Teilbereiche zu einer Elektrode zusammen verbunden werden. Die so hergestellte Elektrode weist dann die vorteilhaften Eigenschaften der verschiedenen Elektrodenmaterialien in Kombination auf. So kann beispielsweise bei einer Elektrode ein erstes Elektrodenmaterial, das eine besonders hohe Energiespeicherdichte ermöglicht, oder das bei Entladung eine geringe Spannungsabnahme der Vorrichtung bzw. Zelle ermöglicht, oder das eine besonders ausgeprägte Fähigkeit zum Bereitstellen von hohen Stromwerten, insbesondere Spitzenstromwerten, aufweist, verbunden bzw. kombiniert werden mit einem zweiten Elektrodenmaterial, das eine andere besonders ausgeprägte Eigenschaft, die von der besonders ausgeprägten Eigenschaft des ersten Elektrodenmaterials verschieden ist, aufweist.

Die zwei, drei, vier oder mehr Teilbereiche mit Kathodenmaterial und die zwei, drei, vier oder mehr Teilbereiche mit Anodenmaterial können jeweils streifenförmige Teilbereiche sein. Durch die Verwendung streifenförmiger Teilbereiche lassen sich die Flächenanteile verschiedener Elektrodenmaterialien und damit die gemischte bzw. kombinierte Eigenschaft einer zusammengesetzten Elektrode besonders leicht einstellen, beispielsweise durch Einstellen der Flächenanteile, insbesondere bei streifenförmigen Teilbereichen der Breiten der Flächenanteile.

Ferner wird ein Verfahren zur Herstellung einer nach galvanischen Prinzipien arbeitenden Vorrichtung, insbesondere einer Lithium-Ionen-Zelle, bereitgestellt, das die folgenden Schritte umfasst: Bereitstellen von fehlstellenfreien, insbesondere gemäß dem Verfahren nach dem zweiten Aspekt der Erfindung hergestellten, ersten streifenförmigen Teilbereiche mit einem ersten Kathodenmaterial, Bereitstellen von fehlstellenfreien, insbesondere gemäß dem Verfahren nach dem zweiten Aspekt hergestellten, zweiten streifenförmigen Teilbereichen mit einem zweiten Kathodenmaterial, Bereitstellen von fehlstellenfreien, insbesondere gemäß dem Verfahren nach dem zweiten Aspekt der Erfindung hergestellten, ersten streifenförmigen Teilbereichen mit einem ersten Anodenmaterial, Bereitstellen von fehlstellenfreien, insbesondere gemäß dem Verfahren nach dem zweiten Aspekt hergestellten, zweiten streifenförmigen Teilbereichen mit einem zweiten Anodenmaterial, Ausbilden einer flächenförmigen Kathode aus parallel zueinander angeordneten und miteinander verbundenen Teilbereichen, wobei die ersten Teilbereiche mit dem ersten Kathodenmaterial und die zweiten Teilbereiche mit dem zweiten Kathodenmaterial alternierend miteinander verbunden werden, Ausbilden einer flächenförmigen Anode aus parallel zueinander angeordneten und miteinander verbundenen Teilbereichen, wobei die ersten Teilbereiche mit dem ersten Anodenmaterial und die zweiten Teilbereiche mit dem zweiten Anodenmaterial alternierend miteinander verbunden werden, und Ausbilden einer Übereinanderanordnung bestehend aus der Kathode als ersten Schicht, einer Separatorschicht aus oberflächenförmig bereitgestelltem Separatormaterial als zweiten Schicht und der Anode als dritten Schicht. Dieses Verfahren ermöglicht das vorteilhafte Kombinieren in der Kathode bzw. in der Anode von zwei unterschiedlichen, besonders vorteilhaften Eigenschaften zweier verschiedener Elektrodenmaterialien, wie beispielsweise die Eigenschaft relativ geringer Spannungsabnahme bei einer Entladung der Vorrichtung (als beispielsweise erste vorteilhafte Eigenschaft) und die Eigenschaft, relativ hohe Stromspitzenwerte liefern zu können als beispielsweise zweite vorteilhafte Eigenschaft. Gemäß einer bevorzugten Ausführungsform der vorliegenden Erfindung ist es vorgesehen, dass die zwei, drei, vier oder mehr Teilbereiche mit Kathodenmaterial und die zwei, drei, vier bzw. mehr Teilbereiche mit Anodenmaterial jeweils streifenförmige Teilbereiche sind.

Gemäß einer weiteren bevorzugten Ausführungsform der vorliegenden Erfindung ist es vorgesehen, dass das Verfahren folgende Schritten umfasst:
- Bereitstellen von fehlstellenfreien ersten streifenförmigen Teilbereichen mit einem ersten Kathodenmaterial,
- Bereitstellen von fehlstellenfreien zweiten streifenförmigen Teilbereichen mit einem zweiten Kathodenmaterial,
- Bereitstellen von fehlstellenfreien ersten streifenförmigen Teilbereichen mit einem ersten Anodenmaterial,
- Bereitstellen von fehlstellenfreien zweiten streifenförmigen Teilbereichen mit einem zweiten Anodenmaterial,
- Ausbilden einer flächenförmigen Kathode aus parallel zueinander angeordneten und miteinander verbundenen Teilbereichen, wobei die ersten Teilbereiche mit dem ersten Kathodenmaterial und die zweiten Teilbereiche mit dem zweiten Kathodenmaterial alternierend miteinander verbunden werden,
- Ausbilden einer flächenförmigen Anode aus parallel zueinander angeordneten und miteinander verbundenen Teilbereichen, wobei die ersten Teilbereiche mit dem ersten Anodenmaterial und die zweiten Teilbereiche mit dem zweiten Anodenmaterial alternierend miteinander verbunden werden, und
- Ausbilden einer Übereinanderanordnung bestehend aus der Kathode als ersten Schicht, einer Separatorschicht aus flächenförmig bereitgestelltem Separatormaterial als zweiten Schicht und der Anode als dritten Schicht.

Bei diesem Verfahren können die jeweiligen streifenförmigen Teilbereiche der Kathode und die streifenförmigen Teilbereiche der Anode in der Übereinanderanordnung kongruent übereinander mit dazwischen angeordnetem Separatormaterial angeordnet sein. So können Teilbereiche mit verschiedenen vorteilhaften Eigenschaften in der Kathode entsprechenden Teilbereichen mit vergleichbaren verschiedenen Merkmalen in der Anode einander gegenübergestellt werden und somit insbesondere nach diesen unterschiedlichen Merkmalen optimierte Teilbereiche der Zelle räumlich nebeneinander angeordnet bzw. entworfen werden. Gemäß einer bevorzugten Ausführungsform der vorliegenden Erfindung ist es vorgesehen, dass die jeweiligen streifenförmigen Teilbereiche der Kathode und die streifenförmigen Teilbereiche der Anode in der Übereinanderanordnung kongruent übereinander mit dazwischen angeordnetem Separatormaterial angeordnet werden.

Dabei kann das erste Kathodenmaterial und das zweite Kathodenmaterial das gleiche Kathodenmaterial sein. Dabei ist noch eine Variation in der Dicke in den zwei verschiedenen Teilbereichen möglich. Gemäß einer bevorzugten Ausführungsform der vorliegenden Erfindung ist es vorgesehen, dass das erste Kathodenmaterial und das zweite Kathodenmaterial das gleiche Kathodenmaterial ist, bzw. dass das erste Anodenmaterial und das zweite Anodenmaterial das gleiche Anodenmaterial ist.

Insbesondere können die ersten streifenförmigen Teilbereiche der Kathode das erste Kathodenmaterial in einer ersten Dicke und die zweiten streifenförmigen Teilbereiche der Kathode das zweite Kathodenmaterial in einer zweiten Dicke enthalten. Gemäß einer bevorzugten Ausführungsform der vorliegenden Erfindung ist es vorgesehen, dass die ersten streifenförmigen Teilbereiche der Kathode das erste Kathodenmaterial in einer ersten Dicke und die zweiten streifenförmigen Teilbereiche der Kathode das zweite Kathodenmaterial in einer zweiten Dicke enthalten.

Auch kann das erste Anodenmaterial und das zweite Anodenmaterial das gleiche Anodenmaterial sein, Auch dabei ist noch eine Variation in der Dicke der Teilbereiche der Anode möglich. Insbesondere können die ersten streifenförmigen Teilbereiche der Anode das erste Anodenmaterial in einer dritten Dicke und die zweiten streifenförmigen Teilbereiche der Anode das zweite Anodenmaterial in einer vierten Dicke enthalten. Gemäß einer bevorzugten Ausführungsform der vorliegenden Erfindung ist es vorgesehen, dass die ersten streifenförmigen Teilbereiche der Anode das erste Anodenmaterial in einer dritten Dicke und die zweiten streifenförmigen Teilbereiche der Anode das zweite Anodenmaterial in einer vierten Dicke enthalten.

In dieser Anordnung können insbesondere Teilbereiche mit dem Kathodenmaterial in der relativ größeren Dicke in der Übereinanderanordnung kongruent in Bezug auf die Teilbereiche der Anode mit dem Anodenmaterial in der relativ größeren Dicke angeordnet sein. Dadurch stehen sich jeweils Anoden- und Kathodenteilbereiche mit der jeweils relativ größeren Dicke gegenüber. Gemäß einer bevorzugten Ausführungsform der vorliegenden Erfindung ist es vorgesehen, dass Teilbereiche mit dem Kathodenmaterial in der relativ größeren Dicke in der Übereinanderanordnung kongruent in Bezug auf die Teilbereiche der Anode mit dem Anodenmaterial in der relativ größeren Dicke angeordnet sind.

Nach einem dritten Aspekt der vorliegenden Erfindung wird eine Elektrode, die insbesondere eine Kathode oder eine Anode sein kann, für eine nach galvanischen Prinzipien arbeitende Vorrichtung, insbesondere eine Lithium-Ionen-Zelle bereitgestellt. Die Elektrode umfasst flächenförmig angeordnetes Elektrodenmaterial. Erfindungsgemäß weist das Elektrodenmaterial einen fehlstellenfreien ersten Teilbereich und einen fehlstellenfreien zweiten Teilbereich auf. Dabei weist der erste Teilbereich einen ersten Randabschnitt und der zweite Teilbereich einen in Bezug auf den ersten Randabschnitt formschlüssig ausgebildeten, zweiten Randabschnitt auf.

Bei dieser Elektrode können der erste Teilbereich und der zweite Teilbereich entlang von zumindest Teilabschnitten des ersten und zweiten Randabschnitts miteinander verbunden sein. Eine derartig aus zusammengesetzten Teilbereichen bereitgestellte Elektrode erlaubt eine besonders wirtschaftliche Herstellungsweise dadurch, dass auch beim Auftreten einer oder mehrerer Fehlstellen, nach Entfernen der Fehlstelle/n bzw. die Fehlstellen umgebenden Teilbereiche/n, verbleibende fehlstellenfreie verwendet werden können, um insgesamt eine fehlstellenfreie Elektrode bereitzustellen. Gemäß einer bevorzugten Ausführungsform der vorliegenden Erfindung ist es vorgesehen, dass der erste Teilbereich einen ersten Randabschnitt und der zweite Teilbereich einen in Bezug auf den ersten Randabschnitt formschlüssig ausgebildeten, zweiten Randabschnitt aufweist, wobei der erste Teilbereich und der zweite Teilbereich entlang von zumindest Teilabschnitten des ersten und zweiten Randabschnitts miteinander verbunden sind.

Wie oben angegeben, ist unter dem Begriffs fehlstellenfrei zu verstehen, dass der erste Teilbereich und der zweite Teilbereich jeweils als Ergebnis eines Prüfverfahrens (Detektionsschritt ii), in dem detektiert worden ist, ob und gegebenenfalls wo auf dem flächenförmigen Elektrodenmaterial eine oder mehrere Fehlstellen vorhanden sind, als frei von Fehlstellen bewertet worden ist.

Insbesondere kann sowohl der erste als auch der zweite fehlstellenfreie Teilbereich jeweils gemäß dem Verfahren nach dem ersten bzw. zweiten Aspekt der vorliegenden Erfindung hergestellt worden sein. Dadurch ist sichergestellt, dass eine Überprüfung auf Fehlstellenfreiheit im Rahmen des Detektionsschritts (Schritt ii), mit dem festgestellt wird, ob und gegebenenfalls wo auf der flächenförmigen Elektrode eine oder mehrere Fehlstellen vorhanden sind, stattgefunden hat, und dass die Teilbereiche im Rahmen dieses Überprüfungsverfahrens als frei von Fehlstellen bewertet worden sind.

Der erste Randabschnitt bzw. Teilbereich und der zweite Randabschnitt bzw. Teilbereich können aneinander stoßend miteinander verbunden sein. So wird eine durch die Naht bedingte Vergrößerung der Dicke in der Nähe der Naht vermieden und beim Aneinanderstoßen von zwei Teilbereichen mit im wesentlichen gleicher Dicke an der Naht eine im wesentlichen konstante Dicke erzielt. Gemäß einer bevorzugten Ausführungsform der vorliegenden Erfindung ist es vorgesehen, dass das der erste Randabschnitt und der zweite Randabschnitt aneinander stoßend miteinander verbunden sind.

Der erste Randabschnitt bzw. Teilbereich und der zweite Randabschnitt bzw. Teilbereich können auch einander überlappend miteinander verbunden sein. So kann eine festere Verbindung zwischen den zu verbindenden Randbereichen bzw. Randabschnitten erzielt werden. Gemäß einer bevorzugten Ausführungsform der vorliegenden Erfindung ist es vorgesehen, dass das der erste Randabschnitt und der zweite Randabschnitt einander überlappend miteinander verbunden sind.

In der zusammengesetzten Elektrode nach dem dritten Aspekt kann ein jeweiliger Teilbereich streifenförmig ausgebildet sein. Streifenförmige Teilbereiche sind aufgrund der im wesentlichen geradlinigen Randabschnitte besonders leicht verarbeitbar und miteinander verbindbar. Gemäß einer bevorzugten Ausführungsform der vorliegenden Erfindung ist es vorgesehen, dass ein jeweiliger Teilbereich streifenförmig ist.

Der erste Teilbereich kann ein erstes Elektrodenmaterial enthalten und der zweite Teilbereich kann ein zweites Elektrodenmaterial enthalten. So können in der zusammengesetzten Elektrode verschiedene vorteilhafte Eigenschaften der verschiedenen Elektrodenmaterialien in vorteilhafter Weise gemischt bzw. kombiniert werden. Beispielsweise können so die Eigenschaft einer geringen Spannungsabnahme bei Entladung der Vorrichtung, die Fähigkeit zum Bereitstellen eines besonders hohen Stromwerts während eines kurzen Zeitintervalls oder die Fähigkeit zum Speichern einer besonders hohen Energiedichte in vorteilhafter Weise in der zusammengesetzten Elektrode als vorteilhafte Eigenschaft des ersten Elektrodenmaterials mit einer davon verschiedenen vorteilhaften Eigenschaft des zweiten Elektrodenmaterials gemischt bzw. kombiniert werden. Gemäß einer bevorzugten Ausführungsform der vorliegenden Erfindung ist es vorgesehen, dass der erste Teilbereich ein erstes Elektrodenmaterial und der zweite Teilbereich ein zweites Elektrodenmaterial enthält.

Der erste Teilbereich kann ein erstes Elektrodenmaterial mit einer ersten Dicke und der zweite Teilbereich ein zweites Elektrodenmaterial mit einer zweiten Dicke enthalten. Gemäß einer bevorzugten Ausführungsform der vorliegenden Erfindung ist es vorgesehen, dass der erste Teilbereich ein erstes Elektrodenmaterial mit einer ersten Dicke und der zweite Teilbereich ein zweites Elektrodenmaterial mit einer zweiten Dicke enthält.

Die Elektrode kann auch drei oder mehr streifenförmige, insbesondere bezüglich ihrer jeweiligen Längsachse parallel zueinander und nebeneinander angeordnete Teilbereiche umfassen. Gemäß einer bevorzugten Ausführungsform der vorliegenden Erfindung ist es vorgesehen, dass die Elektrode drei oder mehr streifenförmige, bezüglich ihrer jeweiligen Längsachsen parallel zueinander und nebeneinander angeordnete Teilbereiche umfasst.

In der Elektrode kann abwechselnd ein Teilbereich mit einem in einer ersten Dicke ausgebildeten ersten Elektrodenmaterial und ein Teilbereich mit ein mit einer zweiten Dicke ausgebildeten zweiten Elektrodenmaterial angeordnet sein. Gemäß einer bevorzugten Ausführungsform der vorliegenden Erfindung ist es vorgesehen, dass alternierend ein Teilbereich mit einem in einer ersten Dicke ausgebildeten ersten Elektrodenmaterial und ein Teilbereich mit einem in einer zweiten Dicke ausgebildeten zweiten Elektrodenmaterial angeordnet ist.

Nach einem vierten Aspekt der vorliegenden Erfindung wird eine Elektrode für eine nach galvanischen Prinzipien arbeitende Vorrichtung, insbesondere eine Lithium-Ionen-Zelle, bereitgestellt. Die Elektrode umfasst ein flächenförmig angeordnetes Elektrodenmaterial. Erfindungsgemäß weist das Elektrodenmaterial einen einteiligen fehlstellenfreien Bereich auf. Auch hierin ist unter dem Begriff fehlstellenfrei zu verstehen, dass der als fehlstellenfrei geforderte Teilbereich als Ergebnis eines Prüfverfahrens, in dem detektiert worden ist, ob und gegebenenfalls wo auf der flächenförmigen Elektrode eine oder mehrere Fehlstellen vorhanden sind, als frei von Fehlstellen bewertet worden ist. Mit anderen Worten, die gesamte Fläche des Elektrodenmaterials ist als fehlstellenfrei bewertet und ist einteilig, d.h. nicht aus mehreren fehlstellenfreien Teilbereichen zusammengesetzt, so dass auch keine Naht aufgrund eines Zusammensetzens vorhanden ist. Gemäß einer bevorzugten Ausführungsform der vorliegenden Erfindung ist es vorgesehen, dass das Elektrodenmaterial einen einteiligen, fehlstellenfreien, insbesondere einen auf Fehlstellenfreiheit überprüften Teilbereich aufweist.

Eine Elektrode nach dem dritten bzw. vierten Aspekt der vorliegenden Erfindung kann ein alle Teilbereiche der Elektrode überdeckendes, flächenförmig ausgebildetes Separatormaterial umfassen. Durch die Kombination der Elektroden mit dem einteiligen Separatormaterial ist die Elektrode für die weitere Verarbeitung bzw. den Aufbau einer nach galvanischen Prinzipien arbeitenden Vorrichtung vorbereitet. Gemäß einer bevorzugten Ausführungsform der vorliegenden Erfindung ist es vorgesehen, dass die Elektrode ein alle Teilbereiche überdeckendes, flächenförmig ausgebildetes Separatormaterial umfasst.

Die Elektrode nach dem dritten bzw. vierten Aspekt der vorliegenden Erfindung kann, zumindest in Teilbereichen, aufgewickelt bzw. zusammengerollt sein, wodurch eine kompakte Bauform der Elektrode erzielt wird. Gemäß einer bevorzugten Ausführungsform der vorliegenden Erfindung ist es vorgesehen, dass die Elektrode aufgewickelt ist.

In einer alternativen kompakten Bauform kann die Elektrode in regelmäßigen Abständen und entlang von im wesentlichen parallel zueinander angeordneten Faltlinien abwechselnd in einer ersten Richtung und einer der ersten Richtung entgegengesetzten zweiten Richtung gefaltet sein, und eine Übereinanderanordnung von übereinander angeordneten und jeweils entlang einer Faltlinie zusammenhängenden Abschnitten umfassen. So wird eine nach Art einer Ziehharmonika zusammengefaltete, ursprünglich flächenförmige Elektrode, d.h. eine Elektrode mit einer im Querschnitt gesehenen M-Form bereitgestellt. In dieser Bauform kann insbesondere ferner zwischen zwei jeweiligen übereinander angeordneten Abschnitten flächenförmig ausgebildetes Separatormaterial angeordnet sein, insbesondere in der Form von Bögen aus Separatormaterial, die zwischen den jeweils übereinander angeordneten Abschnitten, insbesondere kongruent zu den übereinander angeordneten Abschnitten, angeordnet sind. Eine so mit Separatormaterial ausgestattete Elektrode ist vorbereitet für das Verbauen bzw. die Verwendung in einer nach galvanischen Prinzipien arbeitenden Vorrichtung. Gemäß einer bevorzugten Ausführungsform der vorliegenden Erfindung ist es vorgesehen, dass die Elektrode in regelmäßigen Abständen und entlang von im Wesentlichen parallel zueinander angeordneten Faltlinien abwechselnd in einer ersten Richtung und einer der ersten Richtung entgegen gesetzten Richtung gefaltet ist und eine Übereinanderanordnung von übereinander angeordneten und jeweils entlang einer Faltlinie zusammenhängenden Abschnitten umfasst, und dass insbesondere ferner zwischen zwei jeweiligen übereinander angeordneten Abschnitten flächenförmig ausgebildetes Separatormaterial, insbesondere in der Form von kongruent zu den übereinander angeordneten Abschnitten ausgebildete Bögen von Separatormaterial, angeordnet ist.

Ferner wird eine nach galvanischen Prinzipien arbeitende Vorrichtung, insbesondere eine Lithium-Ionen-Zelle, bereitgestellt, die eine Übereinanderanordnung mit folgenden Schichten umfasst: Als erste Schicht eine fehlstellenfreie erste Elektrode, die insbesondere gemäß einem Verfahren nach dem ersten bzw. zweiten Aspekt der vorliegenden Erfindung hergestellt worden ist und die mindestens zwei zusammengesetzte fehlstellenfreie Teilbereiche umfasst, als zweite Schicht eine Separatorschicht mit einem flächenförmig ausgebildeten Separatormaterial, und als dritte Schicht eine fehlstellenfreie zweite Elektrode, die insbesondere gemäß einem Verfahren nach dem ersten bzw. zweiten Aspekt der vorliegenden Erfindung hergestellt worden ist, die einen einteiligen Teilbereich umfasst und die zu der ersten Elektrode komplementär ist. Dabei ist die Separatorschicht zwischen der ersten Elektrode und der komplementären zweiten Elektrode angeordnet und überdeckt die erste bzw. die zweite Elektrode. In dieser Vorrichtung ist eine zusammengesetzte fehlstellenfreie Elektrode mit einer einteiligen fehlstellenfreien Elektrode kombiniert, was vorteilhaft im Sinne einer vergrößerten Wirtschaftlichkeit ist, wenn das Elektrodenmaterial der zusammengesetzten Elektrode herstellungsbedingt eine relativ große Fehlstellenanzahl aufweist, weil die Fehlstellen beseitigt werden und die fehlstellenfreien Teilbereiche zu einer insgesamt fehlstellenfreien Elektrode zusammengesetzt worden sind.

Nach ferner wird eine nach galvanischen Prinzipien arbeitende Vorrichtung, insbesondere eine Lithium-Ionen-Zelle bereitgestellt, die eine Übereinanderanordnung mit folgenden Schichten umfasst: als erste Schicht eine fehlstellenfreie Kathode, die mindestens zwei zusammengesetzte fehlstellenfreie Teilbereiche umfasst, als zweite Schicht eine Separatorschicht mit einem flächenförmig ausgebildeten Separatormaterial, und als dritte Schicht eine fehlstellenfreie Anode, die mindestens zwei zusammengesetzte fehlstellenfreie Teilbereiche umfasst. Dabei ist die Separatorschicht zwischen der Kathode und der Anode angeordnet und überdeckt die Kathode bzw. die Anode. Insbesondere kann die Kathode bzw. die Anode gemäß dem Verfahren nach dem ersten bzw. dem zweiten Aspekt der vorliegenden Erfindung hergestellt worden sein.

Die Kathode kann drei- oder mehr streifenförmige Teilbereiche und die Anode kann streifenförmige Teilbereiche in der gleichen Anzahl wie die Kathode aufweisen, wobei die Teilbereiche der Kathode und die Teilbereiche der Anode jeweils kongruent zueinander angeordnet sind.

Die Kathode kann alternierend Teilbereiche mit einem in einer ersten Dicke ausgebildeten ersten Kathodenmaterial und Teilbereiche mit einem in einer zweiten Dicke ausgebildeten zweiten Kathodenmaterial aufweisen. Ferner kann die Anode alternierend Teilbereiche mit einem in einer dritten Dicke ausgebildeten ersten Anodenmaterial und Teilbereiche mit einem in einer vierten Dicke ausgebildeten zweiten Anodenmaterial aufweisen.

Das erste Kathodenmaterial kann das gleiche sein wie das zweite Kathodenmaterial. Das erste Anodenmaterial kann das gleiche sein wie das zweite Anodenmaterial.

In der Übereinanderanordnung können Teilbereiche der Kathode mit dem Kathodenmaterial in der relativ größeren Dicke kongruent angeordnet sein in Bezug auf die Teilbereiche der Anode mit dem Anodenmaterial in der relativ größeren Dicke. Alternativ dazu können in der Übereinanderanordnung Teilbereiche der Kathode mit dem Kathodenmaterial in der größeren relativ Dicke kongruent in Bezug auf die Teilbereiche der Anode mit dem Anodenmaterial in der relativ kleineren Dicke angeordnet sein.

Gemäß einer bevorzugten Ausführungsform der Erfindung ist eine Vorrichtung vorgesehen, bei der Teilbereiche der Kathode mit dem Kathodenmaterial in der größeren Dicke in der Übereinanderanordnung in Bezug auf die Teilbereiche der Anode mit dem Anodenmaterial in der kleineren Dicke kongruent angeordnet sind.

Für die vorgenannten vorteilhaften Ausführungsformen der nach galvanischen Prinzipien arbeitenden Vorrichtung sind die gleichen bzw. ähnliche Vorteile zu nennen, wie sie bereits oben bei der Darstellung der entsprechenden vorteilhaften Ausführungsformen des Verfahrens nach dem ersten bzw. zweiten Aspekt der Erfindung beschrieben worden sind.

Weitere vorteilhafte Ausführungsformen und Vorteile der Erfindung ergeben sich auch aus den beigefügten Zeichnungen. Darin zeigen:
Figuren 1a bis 1d Draufsichten auf eine flächenförmige Elektrode in verschiedenen Stadien des erfindungsgemäßen Herstellungsverfahrens;
Fig. 2 Querschnittsansichten von kompakten Bauformen einer erfindungsgemäßen Elektrode, Fig. 2a eine zusammengerollte Elektrode und Fig. 2b eine mit M-förmigem Querschnitt bzw. in Ziehharmonika-Art zusammengefaltete Elektrode;
Fig. 3 verschiedene Ausführungsformen einer zusammengesetzten Elektrode, insbesondere
Fig. 3a eine Aufsicht auf eine aus Teilbereichen zusammengesetzte Elektrode, Fig. 3b einen Querschnitt durch aneinanderstoßende Teilbereiche und Fig. 3c einen Querschnitt durch teilweise überlappend zusammengesetzte Teilbereiche;
Fig. 4 einen Querschnitt durch eine erfindungsgemäße nach galvanischen Prinzipien arbeitende Vorrichtung in einer ersten Ausführungsform; und
Fig. 5 einen Querschnitt durch eine erfindungsgemäße, nach galvanischen Prinzipien arbeitende Vorrichtung in einer zweiten Ausführungsform.

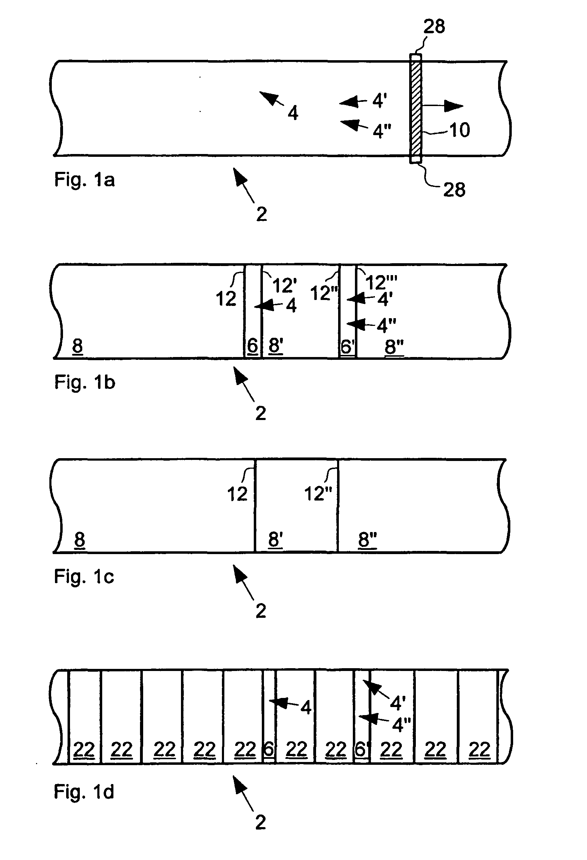

Fig. 1a zeigt eine Draufsicht auf eine flächenförmige Elektrode 2, die bahnförmig in einem Herstellungsschritt in einer Herstellungsvorrichtung (nicht gezeigt) hergestellt worden ist. Zum Überprüfen, ob und gegebenenfalls wo auf der flächenförmigen Elektrode 2 eine oder mehrere Fehlstellen 4, 4', 4" vorhanden sind, wird, in Implementierung des Detektionsschritts (Schritt ii) ein Messfenster 28 einer Detektionsvorrichtung (nicht gezeigt) in Längsrichtung der bahnförmigen Elektrode 2 (in Fig. 1A in Richtung des nach rechts zeigenden Pfeiles) von einer Messposition zu einer jeweiligen nächsten Messposition bewegt und in der jeweiligen Messposition in einem Bereich 10 der Oberfläche der bahnförmigen Elektrode ein Messvorgang ausgeführt, um zu detektieren, ob und wo in dem Messfenster 28 bzw. dem von dem Messfenster 28 erfassten Bereich 10 der Oberfläche der aus dem Elektrodenmaterial gebildeten Schicht eine Fehlstelle vorhanden ist. In den verschiedenen Messpositionen können die jeweils zugehörigen Messfenster 28 bzw. Bereiche 10 der Oberfläche aneinandergrenzend oder zum Erzielen einer Redundanz teilweise überlappend angeordnet sein. Beim Ausführen des Detektionsschritts wurden in den vom Messfenster bereits abgetasteten Bereichen der Oberfläche der bahnförmigen Elektrode Fehlstellen 4, 4', 4" detektiert und deren jeweilige Position bestimmt und aufgezeichnet.

Die konkrete Art des Messverfahrens ist für die Erfindung nicht wesentlich. Das Messverfahren kann beispielsweise ein optisches Verfahren, ein mikroskopisches Verfahren, ein Verfahren, das Messungen der elektrischen Leitfähigkeit von Bereichen der Elektrodenschicht umfasst, ein Verfahren das Messungen der dielektrischen Kapazität von Bereichen der Elektrodenschicht umfasst, oder Kombinationen hieraus, wie oben allgemein beschrieben, sein.

Auch die Form des Messfensters und die Abfolge bzw. Abtastweise, in der das Messfenster nacheinander verschiedene Bereiche der Oberfläche der Elektrodenschicht erfasst, ist für die Erfindung nicht wesentlich, solange die flächenförmige, hier insbesondere bahnförmige Elektrode vollständig erfasst bzw. abgetastet wird. Das Messfenster 28 kann ein streifenförmiges Messfenster sein, wie in Fig. 1a gezeigt, das die Breite der flächenförmigen Elektrode vollständig überdeckt und in einer Längsrichtung über die bahnförmige-flächenförmige Elektrode bewegt wird. Es kann jedoch auch ein Messfenster sein mit einer größten Abmessung (Breite bzw. Länge), die kleiner als eine kleinste Abmessung (Breite bzw. Länge) der flächenförmigen Elektrode ist, das beispielsweise zeilenweise in nebeneinander angeordneten oder teilweise überlappenden Zeilen die gesamte Oberfläche der flächenförmige Elektrode abtastet.

Wie in Fig. 1b gezeigt, wird für eine jeweilige detektierte Fehlstelle 4, 4',4" eine im Beispiel streifenförmige Umgebung 6, 6', die eine oder mehrere Fehlstellen enthält, bestimmt. Die Größe und Form der Umgebung, die eine Fehlstelle enthält, kann für eine jeweilige Fehlstelle individuell gewählt werden. Im Beispiel wird zur Vereinfachung eine streifenförmige Umgebung mit vorbestimmter Abmessung (Breite), der jeweilige Ränder 12, 12' bzw. 12" und 12"' aufweist, gewählt.

Dann wird eine jeweilige Umgebung 6, 6', einschließlich der in der Umgebung enthaltenen Fehlstelle (Fehlstelle 4 in der Umgebung 6, Fehlstellen 4', 4" in der Umgebung 6') beseitigt. Zum Beseitigen wird eine jeweilige Umgebung 6, 6' entlang ihres Randes bzw. Abtrennlinien 12, 12', 12", 12"' herausgetrennt, beispielsweise herausgestanzt oder herausgeschnitten. Anschließend werden die verbleibenden Teilbereiche 8, 8' und 8" ohne Fehlstelle an den durch das Beseitigen der Umgebungen entstandenen Lücken entlang der Abtrennlinien zusammengefügt, wie in Fig. 1C gezeigt.

Die in den Figuren 1b und 1c dargestellten Vorgehensweise zum Bestimmen und Beseitigen von Umgebungen von Fehlstellen hat zum Ziel, möglichst große, einteilige Teilbereiche 8, 8', 8", die keine Fehlstellen aufweisen, intakt zu erhalten. Diese werden dann, wie in Fig. 1c gezeigt, zu einer relativ großflächigen, insgesamt fehlstellenfreien Elektrode zusammengesetzt.

In einer anderen Ausführungsform des Verfahrens zum Detektierens und Beseitigen von Fehlstellen werden, wie in Fig. 1d gezeigt, die bei der Überprüfung (in dem Detektionsschritt, Schritt ii) als fehlstellenfrei bewerteten Bereiche der flächenförmigen Elektrode in gleichförmige, im Beispiel streifenförmige, Teilbereiche 22 unterteilt und die fehlstellenfreien Teilbereiche 22 zur weiteren Verarbeitung, nämlich zum Zusammenfügen und Aufbau von fehlstellenfreien Elektroden, zur Verfügung gestellt. In der Nähe von Fehlstellen 4, 4', 4" werden in dieser Variante Umgebungen 6, 6' so bestimmt, dass aus den fehlstellenfreien Bereichen der Oberfläche möglichst viele gleichförmige Teilbereiche 22 definiert und herausgetrennt werden können.

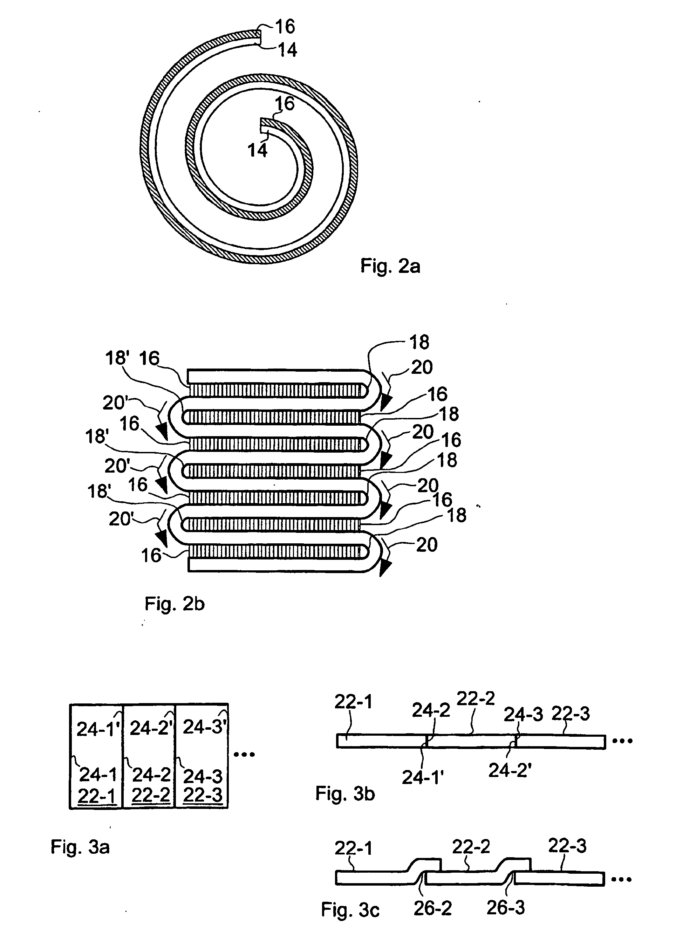

Im Überprüfungsschritt (Detektionsschritt, Schritt ii) als fehlstellenfrei bewertete, große einteilige Bereiche, oder nach dem Beseitigen der Fehlstellen und durch Zusammensetzen von fehlstellenfreien Teilbereichen erhaltene, großflächige Bereiche werden, wie in Fig. 2 veranschaulicht, für den Einbau in nach galvanischen Prinzipien arbeitenden Vorrichtungen in kompaktere Bauformen weiter verarbeitet. Um die in Fig. 2a gezeigte Bauform zu erhalten, wird auf eine nach dem oben (z.B. mit Bezug auf Fig. 1a bis 1c) beschriebenen Verfahren hergestellte, fehlstellenfreie Elektrode eine flächenförmig bereitgestellte Schicht aus Separatormaterial 16 aufgelegt. Dann wird die flächenförmige Elektrode mit dem aufgelegten Separatormaterial 16 zumindest in einem Teilbereich 14 der Elektrode zusammengerollt, wie in Fig. 2a gezeigt. Das Zusammenrollen kann auch so ausgeführt werden, dass aufeinanderfolgende Wicklungen der Rolle einander berühren, so dass im wesentlichen keine Zwischenräume entstehen.

Alternativ zu der in Fig. 2a veranschaulichten Bauform einer Elektrode mit eingebrachtem flächenförmigen Separatormaterial 16 kann eine flächenförmige Elektrode auch als solche, d.h. ohne aufgelegtes Separatormaterial, zusammengerollt werden und, wenn das für die Anwendung erforderlich ist, im zusammengerollten Zustand von flächenförmig bereitgestelltem Separatormaterial umwickelt werden.

Wie in Fig. 2b gezeigt, kann eine bahnförmig bereitgestellte Elektrode in regelmäßigen Abständen jeweils entlang von im wesentlichen parallel zueinander angeordneten Faltlinien 18, 18' abwechselnd in einer ersten Richtung 20 und einer der ersten Richtung entgegengesetzten zweiten Richtung 20' gefaltet werden und in eine Ziehharmonika-artige, im Querschnitt M-förmige Struktur umgeformt werden. Die in Fig. 2b gezeigte Struktur bzw. Bauform weist einen Stapel von übereinander angeordneten und jeweils entlang der Faltlinien 18, 18' zusammenhängenden Abschnitten der flächenförmigen Elektrode auf. Zwischen den jeweils übereinander liegenden Abschnitten der flächenförmigen Elektrode werden Bögen von flächenförmig ausgebildetem Separatormaterial 16 eingefügt. Die so erhaltene, in Fig. 2b gezeigte kompakte Bauform der Elektrode ist für den Einbau in einer nach galvanischen Prinzipien arbeitenden Vorrichtung vorbereitet.

Fig. 3 zeigt verschiedene Ansichten einer fehlstellenfreien Elektrode, die durch Zusammenfügen von mehreren, im gezeigten Beispiel insbesondere drei, gleichförmigen, fehlstellenfreien Teilbereichen 22'1, 22'2 und 22'3 erhalten wird. Die gleichförmigen Teilbereiche 22'1, 22'2 und 22'3 wurden nach dem mit Verweis auf Fig. 1d beschriebenen Verfahren bereitgestellt. Die Teilbereiche 22'1, 22'2 und 22'3 können aus einer, aus einem Herstellungsprozess stammenden flächenförmigen Elektrode entstammen, sie können jedoch auch von verschiedenen, beispielsweise mit unterschiedlichem Elektrodenmaterial oder in unterschiedlicher Elektrodenmaterialdicke hergestellten, flächenförmigen Elektroden entstammen. Für das Kombinieren von aus unterschiedlichen bereitgestellten flächenförmigen Elektroden entstammenden Teilabschnitten und Zusammenfügen zu einer fehlstellenfreien Elektrode ist es vorteilhaft, dass die zusammenzufügenden Teilbereiche 22 entlang der Zusammenfügungsnähte formschlüssig ausgebildet sind, beispielsweise jeweils streifenförmig mit in Längsrichtung geradlinigen Randabschnitten.

Die Teilabschnitte 22'1, 22'2 und 22'3 können so zusammengefügt werden, dass ein jeweiliger Teilabschnitt 22'1, 22'2 mit einem Rand 24-1', 24-2' an einen formschlüssigen Rand 24'2, 24'3 eines benachbart anzufügenden Teilbereichs stoßend in Kontakt gebracht und mit diesem zusammengefügt wird, wie in Fig. 3b gezeigt.

Randabschnitte von benachbart zusammenzufügenden Teilabschnitten 22-1, 22-2, 22-3 können auch, wie in Fig. 3c gezeigt, so zusammengefügt werden, dass ein jeweiliger Randabschnitt eines Teilbereichs einen entsprechenden Randabschnitt des anzufügenden Teilbereichs überlappt, so dass Überlappungsbereiche 26-2, 26-3 entstehen, und in denen die Teilbereiche 26-2, 26-3 miteinander verbunden werden.

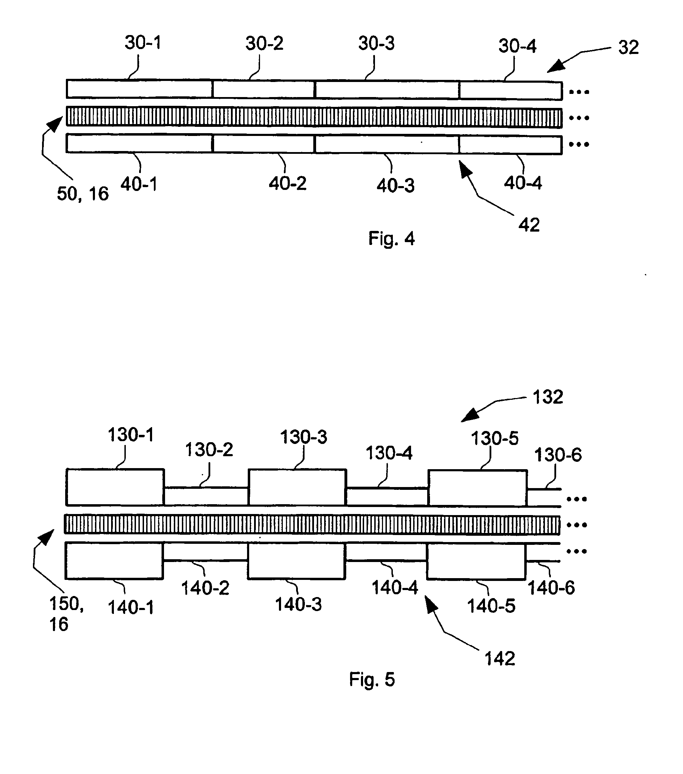

Fig. 4 zeigt beispielhaft eine Anwendungsmöglichkeit für Elektroden, die aus mehreren Teilbereichen zusammengesetzt sind, in einer aus diesen Elektroden zusammengebauten, nach galvanischen Prinzipien arbeitenden Vorrichtung. Ein in Fig. 4 veranschaulichter Verbund zum Aufbau einer nach galvanischen Prinzipien arbeitenden Vorrichtung umfasst eine Übereinanderanordnung von drei Schichten: eine Kathode 32 als erste Schicht, eine Separatorschicht 50 aus flächenförmig bereitgestelltem Separatormaterial 16 als zweite Schicht und eine Anode 42 als dritte Schicht. Die Separatorschicht 50 ist flächendeckend zwischen der Kathode 32 und der Anode 42 angeordnet. Die Kathode 32 besteht aus mehreren zusammengefügten, streifenförmigen Teilbereichen 30'1, 30'2, 30'3, 30'4..., und die Anode 42 besteht aus mehreren zusammengefügten, streifenförmigen Teilbereichen 40'1, 40'2, 40'3, 40'4.... In der Übereinanderanordnung sind einander gegenüberliegende Teilbereiche 30-1, 30-2, 30-3, 30-4 der Kathode 32 jeweils kongruent zu entsprechenden, gegenüberliegenden Teilbereichen 40-1, 40-2, 40-3, 40-4 der Anode 42 angeordnet. Zum Ausbilden der Kathode 32 sind alternierend Teilbereiche 30-1, 30-3 aus einem ersten Kathodenmaterial und Teilbereiche 30-2, 30-4 aus einem zweiten Kathodenmaterial zusammengefügt. Das erste Kathodenmaterial zeichnet sich beispielsweise dadurch aus, dass bei der Verwendung in einer nach galvanischen Prinzipien arbeitenden Zelle im aufgeladenen Zustand der Zelle eine besonders hohe Energiespeicherdichte erzielt wird. Das zweite Kathodenmaterial zeichnet sich beispielsweise dadurch aus, dass bei der Verwendung in einer Zelle während einer Entladung kurzfristig besonders hohe Spitzenstromwerte erzielt werden können. Die Kathode 32 kombiniert bzw. mischt somit eine vorteilhafte Eigenschaft des ersten Kathodenmaterials (hier beispielsweise eine hohe Energiespeicherdichte) mit einer davon verschiedenen vorteilhaften Eigenschaft des zweiten Kathodenmaterials (hier beispielsweise hohe erzielbare Stromspitzenwerte).

Entsprechend umfasst die Anode 42 alternierend angeordnete Teilbereiche 40'1, 40'3 mit einem ersten Anodenmaterial und Teilbereiche 40'2, 40'4 mit einem zweiten Anodenmaterial. Das erste Anodenmaterial ist ausgewählt, dass es optimal mit dem ersten Kathodenmaterial zusammenwirkt, so dass bei der Verwendung in einer nach galvanischen Prinzipien arbeitenden Vorrichtung eine hohe Energiespeicherdichte erzielt wird. Das zweite Anodenmaterial ist so ausgewählt, dass es optimal mit dem zweiten Kathodenmaterial zusammenwirkt, so dass beim Einsatz in einer nach galvanischen Prinzipien arbeitenden Vorrichtung besonders hohe Stromspitzenwerte erzielt werden können.

Fig. 5 zeigt einen Verbund zum Aufbau einer nach galvanischen Prinzipien arbeitenden Vorrichtung nach einer zweiten Ausführungsform. Der Verbund umfasst eine Übereinanderanordnung einer Kathode 132 mit mehreren Teilbereichen 130-1, 130-2, 130-3, 130-4, 130-5, 130-6, einer Separatorschicht 150, die im wesentlichen aus einem flächenförmig bereitgestellten Separatormaterial 16 besteht, und eine Anode 142 mit mehreren Teilbereichen 140-1, 140-2, 140-3, 140-4, 140-5, 140-6. In der Kathode 132 sind alternierend Teilbereiche 130-1, 130-3, 130-5 mit einer größeren Dicke des Kathodenmaterials und Teilbereiche 130-2, 130-4, 130-6 mit einer kleineren Dicke des Kathodenmaterials zusammengefügt. Entsprechend sind in der Anode 142 Teilbereiche 140-1, 140-3, 140-5 mit Anodenmaterial mit einer relativ größeren Dicke und Teilbereiche 140-2, 140-4, 140-6 mit Anodenmaterial mit einer relativ kleineren Dicke alternierend zusammengefügt. Das Kathodenmaterial in den jeweils relativ dickeren Teilbereichen 130-1, 130-3, 130-5 (erstes Kathodenmaterial) ist verschieden von dem Kathodenmaterial in den jeweils dünneren Teilbereichen 130-2, 130-4, 130-6 (zweites Kathodenmaterial). Das Anodenmaterial in den jeweils relativ dickeren Teilbereichen 140-1, 140-3, 140-5 der Anode 142 (erstes Anodenmaterial) ist verschieden von dem Anodenmaterial der jeweils dünneren Teilbereiche 140-2, 140-4, 140-6 (zweites Anodenmaterial). In der Übereinanderanordnung sind jeweils dickere bzw. dünnere Teilbereiche der Kathode 132 kongruent zu entsprechenden dickeren bzw. dünneren Teilbereichen der Anode 142 angeordnet. Das erste Kathodenmaterial und das erste Anodenmaterial sind so ausgewählt und miteinander kombiniert, dass im Zusammenwirken im Betrieb einer aus dem in Fig. 5 gezeigten Verbund aufgebauten, nach galvanischen Prinzipien arbeitenden Vorrichtung eine erste vorteilhafte, besonders ausgeprägte Eigenschaft, beispielsweise eine hohe Energiespeicherdichte oder eine besonders geringe Spannungsabnahme bei der Entladung zeigt. Das zweite Kathodenmaterial und das zweite Anodenmaterial sind so ausgewählt, dass sie im Zusammenwirken eine andere vorteilhafte, besonders ausgeprägte Eigenschaft zeigen, beispielsweise dass diese vorübergehend besonders hohe Entladestromspitzenwerte bereitstellen können.

Das Kombinieren bzw. Mischen von verschiedenen vorteilhaft ausgeprägten Betriebseigenschaften eines Kathoden- bzw. Anodenmaterials kann dadurch realisiert werden, dass eine aus zusammengesetzten Teilabschnitten aus verschiedenen Kathodenmaterial zusammengesetzte Kathode mit einer aus nur einem Anodenmaterial und insbesondere einer nicht zusammengesetzten, aus einem einzigen fehlstellenfreien Bereich aufgebaute Anode kombiniert wird, oder dass umgekehrt eine aus mehreren Teilabschnitten mit unterschiedlichem Anodenmaterial zusammengesetzte Anode mit einer aus nur einem nicht zusammengesetzten, d.h. im wesentlichen einteiligen Abschnitt mit im wesentlichen einem Kathodenmaterial aufgebauten Kathode kombiniert wird.

### Bezugszeichenliste

- 2: flächenförmige Elektrode
- 4, 4', 4": Fehlstelle
- 6, 6': insbesondere streifenförmige Umgebung einer Fehlstelle
- 8, 8', 8": Teilbereich ohne Fehlstelle
- 10: Bereich
- 12, 12', 12", 12'": Abtrennlinie bzw. Rand
- 14: zusammengerollter Teilbereich
- 16: Separatormaterial
- 18, 18': Faltlinie
- 20, 20': Faltrichtung
- 22-1, 22-2, 22-3...: streifenförmiger Teilbereich
- 24-1, 24-1': Rand bzw. Randabschnitt eines ersten streifenförmigen Teilbereichs
- 24-2, 24-2': Rand bzw. Randabschnitt eines zweiten streifenförmigen Teilbereichs
- 24-3, 24-3': Rand bzw. Randabschnitt eines dritten streifenförmigen Teilbereichs
- 26-1, 26-2, 26-3...: Überlappungsbereich des ersten, zweiten, dritten... Teilbereichs
- 28: Messfenster
- 30-1, 30-2, 30-3: Teilbereich mit Kathodenmaterial
- 32: Kathode (erste Ausführungsform)
- 40-1, 40-2, 40-3: Teilbereich mit Anodenmaterial
- 42: Anode (erste Ausführungsform)
- 50: Separatorschicht
- 130-1, 130-2, 130-3: Teilbereich mit Kathodenmaterial
- 132: Kathode (erste Ausführungsform)
- 140-1, 140-2, 140-3: Teilbereich mit Anodenmaterial
- 142: Anode (zweite Ausführungsform)
- 150: Separatorschicht

## Patentansprüche

1. Verfahren zur Herstellung einer Elektrode für eine nach galvanischen Prinzipien arbeitende Vorrichtung, insbesondere eine lithium-Ionen-Zelle, mit den folgenden Schritten:
(i) Detektieren einer oder mehrerer Fehlstellen (4, 4', 4") in oder auf einem flächenförmigen Elektrodenmaterial,
(ii) Bereitstellen von mindestens einem fehlstellenfreien Teilbereich (8, 8', 22, 22') des flächenförmigen Elektrodenmaterials durch Beseitigen einer Umgebung (6, 6') der wenigstens einen Fehlstelle (4, 4', 4") einschließlich der Fehlstelle,
(iii) Verbinden von zwei, drei, vier oder mehr fehlstellenfreien Teilbereichen (30-1, ..., 30-5) eines flächenförmigen Elektrodenmaterials und Ausbilden einer aus Teilbereichen zusammengesetzten Elektrode, insbesondere Kathode (32) oder Anode (42).

2. Verfahren nach Anspruch 1, **dadurch gekennzeichnet, dass** im Detektionsschritt ein Verfahren zum Detektieren aus einer Gruppe ausgewählt ist, die folgendes umfasst:
ein optisches Verfahren, ein Verfahren mit Auswerten mikroskopisch vergrößerter Bilder von Bereichen (10) der flächenförmigen Elektrode, ein Verfahren mit Messen einer elektrischen Leitfähigkeit von Bereichen (10) der flächenförmigen Elektrode, ein Verfahren mit Messen einer dielektrischen Kapazität von Bereichen (10) der flächenförmigen Elektrode oder Kombinationen hieraus.

3. Verfahren nach Anspruch 2, **dadurch gekennzeichnet, dass** das optische Verfahren zum Detektieren von Fehlstellen umfasst:
- Aufnehmen eines Bildes, insbesondere in Reflexion oder Transmission, eines Bereichs (10) der flächenförmigen Elektrode (2),
- Erkennen einer lokalen Abweichung eines Wertes eines für eine Fehlstelle indikativen Bildparameters, beispielsweise Helligkeit oder Kontrast, von einem über eine Fläche bestimmten Mittelwert des Bildparameters.

## Claims

1. A method of producing an electrode for an apparatus operating according to galvanic principles, in particular a lithium ion cell, comprising the following steps:
(i) detecting one or more imperfections (4, 4', 4") in or on a sheet-like electrode material,
(ii) providing for at least one section (8, 8', 22, 22') of the sheet-like electrode material to be free of imperfections by removing the surrounding area (6, 6') of the at least one imperfection (4, 4', 4") including said imperfection,
(iii) connecting two, three, four or more imperfection-free sections (30-1, ... , 30-5) of the sheet-like electrode material and forming an electrode composed of sections, in particular cathode (32) or anode (42).

2. The method according to claim 1, **characterized in that** a detection method is selected in the detection step from among a group comprising the following:
an optical method, a method comprising evaluating microscopically magnified images of areas (10) of the sheet-like electrode, a method comprising measuring electrical conductivity of areas (10) of the sheet-like electrode, a method comprising measuring dielectric capacity of areas (10) of the sheet-like electrode, or combinations thereof.

3. The method according to claim 2, **characterized in that** the optical method of detecting imperfections comprises:
□ recording an image, in particular in reflection or transmission, of an area (10) of the sheet-like electrode (2),
□ detecting a local anomaly in a value of an image parameter indicative of an imperfection, for example brightness or contrast, from an average value for the image parameter determined over an expanse.

## Revendications

1. Procédé de fabrication d'une électrode pour un dispositif fonctionnant selon des principes galvaniques, en particulier une cellule ions-lithium, comprenant les étapes suivantes :
(i) détection d'un ou plusieurs défauts (4, 4', 4") dans ou sur un matériau d'électrode de forme plane ;
(ii) mise en place d'au moins une zone partielle sans défaut (8, 8', 22, 22') du matériau d'électrode de forme plane par la dépose d'un alentours (6, 6') de l'au moins un défaut (4, 4', 4") y compris le défaut ;
(iii) jonction de deux, trois, quatre ou davantage de zones partielles sans défaut (30-1, ..., 30-5) d'un matériau d'électrode de forme plane et formation d'une électrode, en particulier une cathode (32) ou une anode (42), composée de zones partielles.

2. Procédé selon la revendication 1, **caractérisé en ce qu'**à l'étape de détection, un procédé de détection est choisi parmi un groupe qui comprend les suivants : un procédé optique, un procédé comprenant l'analyse d'images agrandies au microscope de zones (10) de l'électrode de forme plane, un procédé comprenant la mesure d'une conductibilité électrique de zones (10) de l'électrode de forme plane, un procédé comprenant la mesure d'une capacité diélectrique de zones (10) de l'électrode de forme plane ou une combinaison de ces procédés.

3. Procédé selon la revendication 2, **caractérisé en ce que** le procédé optique de détection de défauts comprend :
- la saisie d'une image, en particulier par réflexion ou transmission, d'une zone (10) de l'électrode de forme plane (2) ;
- l'identification d'une déviation locale d'une valeur d'un paramètre de l'image indicatif d'un défaut, par exemple la luminosité ou le contraste, par rapport à une valeur moyenne déterminée du paramètre de l'image sur une surface.
